# EUROPÄISCHE PATENTSCHRIFT

(11) **EP 4 356 742 B1**
(45) Veröffentlichungstag und Bekanntmachung des Hinweises auf die Patenterteilung: **07.05.2025**
(21) Anmeldenummer: 22202919.1
(22) Anmeldetag: 21.10.2022
(51) Int. Cl.: A22C 17/00, A23B 4/28

(54) **NADELREGISTER**
NEEDLE REGISTER
REGISTRE D'AIGUILLES

(43) Veröffentlichungstag der Anmeldung: 24.04.2024
(73) Patentinhaber: Schröder Maschinenbau GmbH, 33824 Werther (DE)
(72) Erfinder: Lipsch, Peter, 33824 Werther (DE)
(74) Vertreter: Ter Meer Steinmeister & Partner

(56) Entgegenhaltungen:
- EP-A1- 3 449 731
- EP-A2- 2 545 782
- US-B1- 6 658 990

## Beschreibung

Die Erfindung betrifft ein Nadelregister für Injektionsvorrichtungen zur Injektion von Flüssigkeit in Lebensmittelprodukte, mit einem Nadelträger, der eine Verteilerkammer für die Flüssigkeit bildet, mehreren parallelen, hohlen Nadeln, die so an dem Nadelträger gehalten sind, dass jeweils ein Abschnitt der Nadel, der eine Zufuhröffnung für die Zufuhr der Flüssigkeit in die Nadel enthält, innerhalb der Verteilerkammer liegt oder zumindest in die Verteilerkammer bewegbar ist.

Beispiele für Injektionsvorrichtungen, in denen solche Nadelregister verwendet werden, sind etwa Pökelvorrichtungen, mit denen Lake in Fleischprodukte injiziert wird. Typischerweise sind ein oder mehrere Nadelregister vertikalbeweglich über einem Förderer angeordnet, auf dem das Pökelgut schrittweise vorgerückt wird. Wenn der Förderer anhält, werden die Nadelregister abgesenkt, so dass die Nadeln in das Pökelgut einstechen und die Lake injiziert werden kann.

Aus EP 3 449 731 A1 ist ein Nadelregister dieser Art bekannt, bei dem jeweils mehrere Nadeln an einer geneinsamen Lochplatte gehalten sind, die entnehmbar in der Verteilerkammer aufgenommen ist. Mehrere dieser Lochplatten sind nach Art eines Kachelmusters aneinandergrenzend in der Verteilerkammer angeordnet. Dadurch wird ein einfaches Auswechseln der Nadeln ermöglicht.

Da die Flüssigkeiten, die in die Lebensmittelprodukte injiziert werden, mit den Innenflächen der Nadeln und der Verteilerkammer in Berührung kommen, ist eine regelmäßige und gründliche Reinigung des Nadelregisters unerlässlich.

Aufgabe der Erfindung ist es, ein reinigungsfreundliches Nadelregister zu schaffen. Diese Aufgabe wird erfindungsgemäß dadurch gelöst, dass der Nadelträger in mehrere auf Stoß aneinandergrenzende Segmente unterteilt ist, die jeweils einen Teil der Verteilerkammer bilden, und dass die Teile der Verteilerkammer an den Stoßfugen der Segmente bündig aneinander anschließen.

Im betriebsbereiten Zustand der Pökelvorrichtung sind die Segmente des Nadelträgers - z.B. in einem Rahmen - fest zusammengehalten, so dass die Außenflächen, in denen die betreffenden Teile der Verteilerkammer münden, dicht aneinander anliegen, so dass die Segmente zusammen eine durchgehende Verteilerkammer begrenzen, in der die über einen Zulauf zugeführte Pökellake auf die in den Segmenten des Nadelträgers gehaltenen Nadeln verteilt wird. Wenn das Nadelregister gereinigt werden soll, so wird der Rahmen geöffnet, und die Segmente des Nadelträgers werden voneinander getrennt, so dass sie einzeln gereinigt werden können. Dazu werden die Nadeln entfernt und gegebenenfalls separat gereinigt. Der Teil der Verteilerkammer, der durch ein einzelnes Segment gebildet wird, ist dann ein an beiden Enden offener durchgehender Kanal mit glatten Wänden, der keine schwer zu reinigenden Ecken aufweist und somit beispielsweise mit einer durch den Kanal hindurchgesteckten Bürste einfach gereinigt werden kann.

Vorteilhafte Ausgestaltungen der Erfindung sind in den Unteransprüchen angegeben. Die Nadeln können gruppenweise in Lochplatten gehalten sein, die lösbar in oder an den einzelnen Segmenten des Nadelträgers gehalten sind, so dass sich die alle Nadeln, die sich an derselben Lochplatte befinden, mit einem einzigen Handgriff aus dem betreffenden Segment des Nadelträgers herausziehen lassen.

Wahlweise kann jedes Segment des Nadelträgers auch einen lösbaren Deckel aufweisen, der einen Zugang zu der Verteilerkammer ermöglicht. In dem Fall können die Lochplatten auch im Inneren der Verteilerkammer angeordnet sein.

Wenn die Lochplatten außerhalb der Verteilerkammer liegen, können sie so angeordnet sein, dass sie in der Gebrauchsstellung ebenso wie die Segmente des Nadelträgers auf Stoß aneinander anliegen und dass die Nadeln über die Grenzen der Segmente hinweg in einem einheitlichen Raster angeordnet sind.

Die Mündungen der Segmente der Verteilerkammer können von einer Dichtung umgeben sein, die den Austritt von Lake an den Stoßfugen zwischen den einzelnen Segmenten sicher verhindert. Wahlweise können diese Mündungen als komplementäre Steckverbinder gestaltet sein, die sicherstellen, dass die verschiedenen Teile der Verteilerkammer bündig aneinander anschließen.

Im folgenden wird ein Ausführungsbeispiel anhand der Zeichnung näher erläutert.

Es zeigen:
- Fig. 1: ein Segment eines Nadelträgers eines erfindungsgemäßen Nadelregisters in einer Stirnansicht;
- Fig. 2: das Segment nach Fig. 1 in der Draufsicht; und
- Fig. 3: das komplette Nadelregister in der Draufsicht.

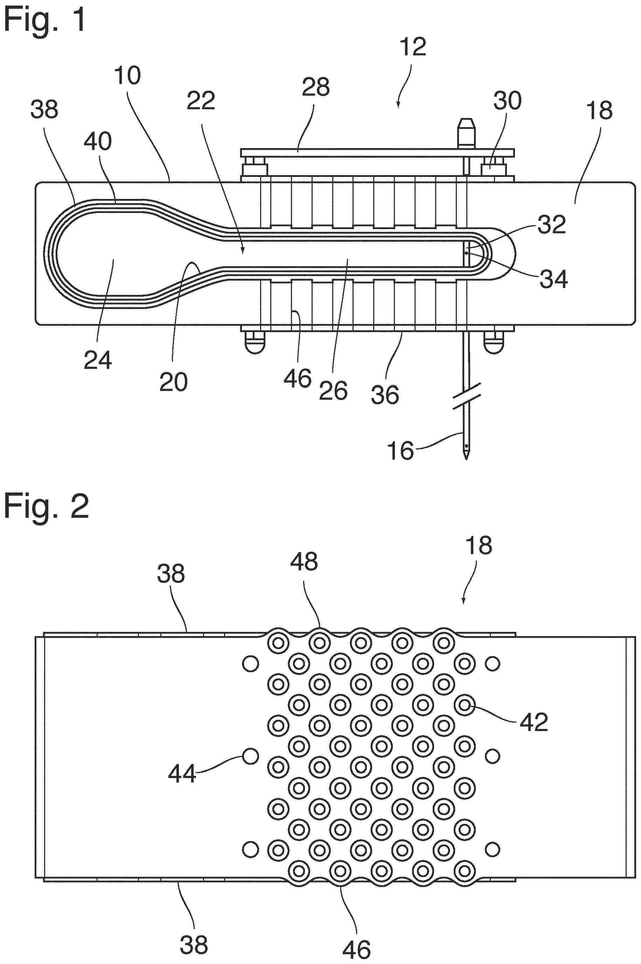

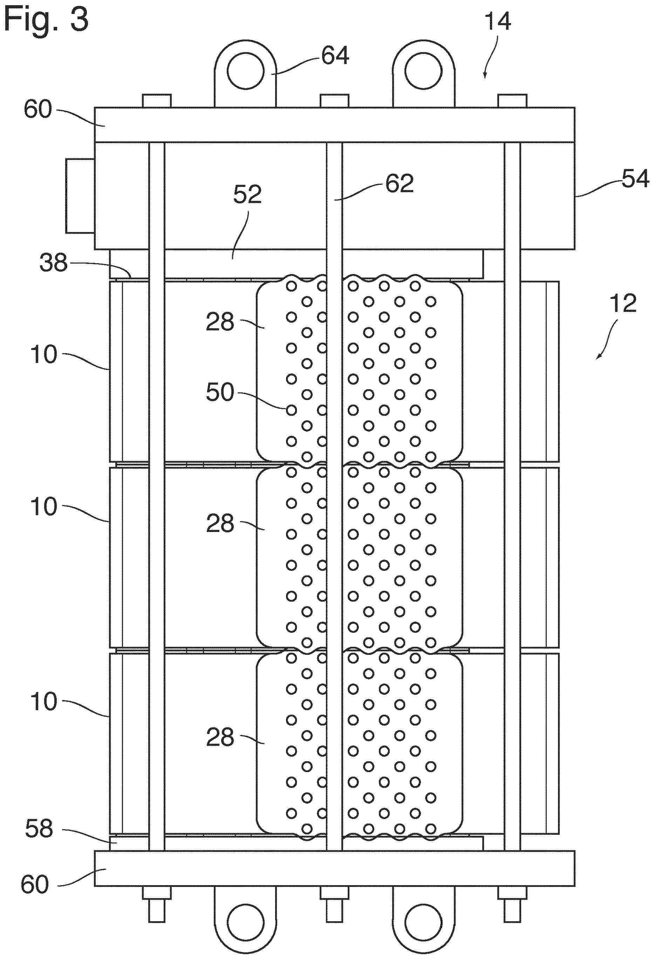

In Fig. 1 ist ein einzelnes Segment 10 eines Nadelträgers 12 dargestellt. Der Nadelträger 12 ist Teil eines Nadelregisters 14, das vollständig in Fig. 3 gezeigt ist und das beispielsweise in einem Pökelinjektor dazu dient, Pökellake in Fleischstücke zu injizieren. An jedem Segment 10 des Nadelträgers 12 sind mehrere hohle Nadeln 16 befestigt, die sich von dem Nadelträger aus senkrecht nach unten erstrecken. In Fig. 1 ist der Einfachheit halber nur eine dieser Nadeln 16 gezeigt.

In dem Pökelinjektor ist das Nadelregister 14 vertikalbeweglich über einem nicht gezeigten Förderer angeordnet, auf dem die Fleischstücke zugeführt werden. Wenn der Nadelträger abgesenkt wird, stechen die Nadeln 16 in das Fleisch ein, so dass die Pökellage injiziert werden kann.

Jedes Segment 10 des Nadelträgers 12 wird in der Hauptsache durch einen Block 18 aus einem lebensmittelverträglichen Kunststoff gebildet, in dem ein in der Richtung senkrecht zur Zeichenebene in Fig. 1 durchgehender Kanal 20 ausgespart ist. Dieser Kanal 20 bildet zusammen mit entsprechenden Kanälen weiterer Segmente 10 des Nadelträgers 12 eine durchgehende Verteilerkammer 22, die den größten Teil der Grundfläche des Nadelträgers 12 einnimmt. Im gezeigten Beispiel bildet die Verteilerkammer 22 auf der linken Seite in Fig. 1 einen Zufuhrkanal 24, der sich über die gesamte Länge der Verteilerkammer erstreckt und einen gegenüber dem Rest der Verteilerkammer vergrößerten Querschnitt aufweist. An diesen Zufuhrkanal 24 schließt sich nach rechts in Fig. 1 ein flacherer Abschnitt 26 der Verteilerkammer an.

Die Nadeln 16 erstrecken sich im Bereich des Abschnitts 26 der Verteilerkammer durch Bohrungen 42 (Fig. 2) des Blockes 18 und sind mit ihren oberen Enden außerhalb des Blockes 18 in Löchern einer Lochplatte 28 befestigt, die lösbar an dem Block 18 fixiert ist und sich über Stützen 30 auf der Oberseite des Blockes 18 abstützt. Jede Nadel 16 weist einen Abschnitt 32 auf, der vertikal durch das Innere der Verteilerkammer 22 verläuft. In diesem Abschnitt 32 befindet sich mindestens eine Zufuhröffnung 34, über die Pökellage aus der Verteilerkammer in das Innere der Hohlnadeln gelangen kann. An der Unterseite des Blockes 18 ist eine weitere Lochplatte 36 aus Metall befestigt, die den Nadeln 16 stabile Führung gibt. In den Bohrungen des Blockes 18 oberhalb und unterhalb des Abschnittes 26 der Verteilerkammer ist jede Nadel 16 mit nicht gezeigten Dichtungen gegenüber der Bohrung abgedichtet, so dass der Austritt von Lake durch diese Bohrungen verhindert wird.

Auf der in Fig. 1 sichtbaren Stirnfläche des Blockes 18 ist ein leicht erhabenes Plateau 38 gebildet, in dem sich die Mündung des Kanals 20 befindet und dessen Rand dem Verlauf der Wand dieses Kanals folgt. In der Stirnfläche dieses Plateaus ist eine um den Kanal 20 umlaufende Nut 40 gebildet, die eine Dichtung zur Abdichtung der Fuge zwischen aneinander angrenzenden Segmenten 10 des Nadelträgers 12 aufnimmt. Ein entsprechendes Plateau und eine entsprechende Nut sind auch auf der entgegengesetzten Stirnfläche des Blockes 18 gebildet, so dass die erwähnte Dichtung in die Nuten 40 beider auf Stoß aneinanderliegender Segmente 10 eingreift.

In Fig. 2 ist der Block 18 in der Draufsicht gezeigt, so dass die Plateaus 38 an beiden Stirnflächen des Blockes sichtbar sind. Außerdem sieht man in Fig. 2 die Mündungen der Bohrungen 42, die die Nadeln 16 aufnehmen und die ein regelmäßiges Raster bilden. Ebenso sind Befestigungslöcher 44 für die Lochplatte 28 erkennbar. Im Bereich der Lochplatte 28 haben die beiden entgegengesetzten Stirnflächen des Blockes 18 außerhalb der Plateaus 38 jeweils ein Wellenprofil 46 bzw. 48. Diese Wellenprofile 46,48 sind zueinander komplementär, so dass die Wellenprofile zweier benachbarter Segmente 10 ineinandergreifen und die Segmente in einer Relativposition halten, in der die Kanäle 20, die die Verteilerkammer 22 bilden, miteinander bündig sind. Zugleich ermöglichen es diese Wellenprofile 46, 48, die Bohrungen 42 so dicht an den Stirnflächen des Blockes 18 anzuordnen, dass sich das Raster dieser Bohrungen 42 über die Stoßfuge zwischen den Segmenten 10 hinweg im benachbarten Segment fortsetzt.

In Fig. 3 ist in einer Draufsicht das komplette Nadelregister 14 gezeigt, dessen Nadelträger 12 in diesem Bespiel durch drei aneinandergereihte Segmente 10 gebildet wird. Zur Aufnahme der in Fig. 3 nicht gezeigten Nadeln 16 weisen die Lochplatten 28 Löcher 50 auf, die im gleichen Raster angeordnet sind wie die Bohrungen 42 in Fig. 2. Auch die Lochplatten 28 haben an ihren Rändern ineinandergreifende Wellenprofile, die den Wellenprofilen 46, 48 entsprechen. Die Stirnfläche des in Fig. 3 obersten Segments 10 schließt mit ihrem Vorsprung 38 an einen Stutzen 52 eines Anschlussblockes 54 an, über den die über einen Zulauf 56 zugeführte Lake unter Druck in die Verteilerkammer 22 zugeführt wird. Das in Fig. 3 unterste Segment 10 schließt mit seinem Vorsprung 38 an eine Abschlussplatte 58 an. Der Anschlussblock 54 und die Abschlussplatte 58 sind zwischen zwei Rahmenelementen 60 gehalten, die durch Zugbolzen 62 lösbar miteinander verbunden und gegeneinander spannbar sind, so dass der Anschlussblock 54, die Segmente 10 und die Abschlussplatte 58 fest zusammengehalten werden. Außenseitig weisen die Rahmenelemente 60 jeweils zwei Führungsaugen 64 auf, mit denen das Nadelregister 64 vertikalbeweglich an nicht gezeigten Führungsstangen geführt ist.

Wenn die Zugbolzen 62 gelöst werden, lassen sich die Segmente 10 des Nadelträgers 12 voneinander trennen, und nach Entfernen der mit den Nadeln 16 bestückten Lochplatten 28 können die durchgehenden Kanäle 20 der einzelnen Segmente einfach und gründlich gereinigt werden.

Während im gezeigten Beispiel die Nadeln 16 starr am Nadelträger 12 gehalten sind, ist die Erfindung auch bei Nadelregistern mit gefederten Nadeln anwendbar, bei denen die Nadeln relativ zum Nadelträger beweglich sind, so dass sie beispielsweise beim Auftreffen auf Knochen ausweichen können.

## Patentansprüche

1. Nadelregister für Injektionsvorrichtungen zur Injektion von Flüssigkeit in Lebensmittelprodukte, mit einem Nadelträger (12), der eine Verteilerkammer (22) für die Flüssigkeit bildet, mehreren parallelen, hohlen Nadeln (16), die so an dem Nadelträger (12) gehalten sind, dass jeweils ein Abschnitt (32) der Nadel, der eine Zufuhröffnung (34) für die Zufuhr der Flüssigkeit in die Nadel enthält, innerhalb der Verteilerkammer (22) liegt oder zumindest in die Verteilerkammer bewegbar ist, **dadurch gekennzeichnet, dass** der Nadelträger in mehrere auf Stoß aneinandergrenzende Segmente (10) unterteilt ist, die jeweils einen Teil (12) der Verteilerkammer (22) bilden, und dass die Teile der Verteilerkammer (22) an den Stoßfugen der Segmente (10) bündig aneinander anschließen.

2. Nadelregister nach Anspruch 1, bei dem die Segmente (10) des Nadelträgers (12) in einer Reihe angeordnet sind.

3. Nadelträger nach Anspruch 2, bei dem die Segmente (10) so gegeneinander spannbar sind, dass ihre aneinander anliegenden Stirnflächen fest gegeneinander angedrückt werden.

4. Nadelregister nach Anspruch 2 oder 3, bei dem die Verteilerkammer (21) einen von den Nadeln (16) durchlaufenden Abschnitt (26) und einen daran anschließenden, sich über sämtliche Segmente (10) erstreckenden Zufuhrkanal (24) mit erweitertem Querschnitt aufweist.

5. Nadelregister nach einem der vorstehenden Ansprüche, bei dem die zwischen den Segmenten (10) gebildeten Stoßfugen jeweils mit einer die Verteilerkammer (22) umgebenden Dichtung (40) abgedichtet sind.

6. Nadelregister nach einem der vorstehenden Ansprüche, bei dem die Nadeln (16) in einem über die Grenzen der Segmente (10) einheitlichen Raster angeordnet sind.

7. Nadelregister nach einem der vorstehenden Ansprüche, bei dem jeweils mehrere Nadeln (16) starr an einer gemeinsamen Lochplatte (28) angeordnet sind, die lösbar an einem der Segmente (10) des Nadelträgers (12) gehalten ist.

8. Nadelträger nach Anspruch 6, bei dem die aneinander anliegenden Stirnflächen der Segmente (10) zueinander komplementäre Wellenprofile (46, 48) aufweisen, die parallel zu den Nadeln (16) verlaufen.

## Claims

1. A needle register for injection devices for injecting liquid into food products, comprising a needle carrier (12) forming a distribution chamber (22) for the liquid, a plurality of parallel hollow needles (16) held on the needle carrier (12) such that a respective portion (32) of the needle, the portion including a supply opening (34) for supplying the liquid into the needle, lies within the distribution chamber (22) or is at least movable into the distribution chamber, **characterized characterized in that** the needle carrier is divided into a plurality of segments (10) which adjoin one another and each form a part (12) of the distributon chamber (22), and **in that** the parts of the distributon chamber (22) adjoin one another flush at the butt joints of the segments (10).

2. The needle register according to claim 1, wherein the segments (10) of the needle carrier (12) are arranged in a row.

3. The needle register according to claim 2, wherein the segments (10) can be clamped against one another in such a way that their abutting end faces are pressed firmly against one another.

4. The needle register according to claim 2 or 3, wherein the distribution chamber (22) has a section (26) through which the needles (16) pass, and an adjoining feed channel (24) extending over all the segments (10) and having an enlarged transverse section.

5. The needle register according to any of the preceding claims, wherein the butt joints formed between the segments (10) are each sealed with a seal (40) surrounding the distribution chamber (22).

6. The needle register according to any of the preceding claims, wherein the needles (16) are arranged in a uniform grid over the boundaries of the segments (10).

7. The needle register according to any of the preceding claims, wherein a respective plurality of needles (16) are rigidly arranged on a common perforated plate (28) which is detachably held on one of the segments (10) of the needle carrier (12).

8. The needle carrier according to claim 6, wherein the abutting end faces of the segments (10) have mutually complementary wave profiles (46, 48) which run parallel to the needles (16).

## Revendications

1. Système d'aiguilles pour dispositifs d'injection destinés à l'injection de liquide dans des produits alimentaires, comportant un support d'aiguilles (12) qui forme une chambre de distribution (22) pour le liquide, plusieurs aiguilles creuses parallèles (16) qui sont maintenues sur le support d'aiguilles (12) de telle sorte qu'une portion (32) des aiguilles, qui contient un orifice d'alimentation (34) pour le transfert de liquide dans l'aiguille, est respectivement à l'intérieur de la chambre de distribution (22) ou est au moins mobile dans la chambre de distribution, **caractérisé en ce que** le support d'aiguilles est divisé en plusieurs segments (10) adjacents bord à bord, qui forment respectivement une partie de la chambre de distribution (22), et **en ce que** les parties de la chambre de distribution (22) sont reliées de manière affleurante à des interstices d'about des segments (10).

2. Système d'aiguilles selon la revendication 1, dans lequel les segments (10) du support d'aiguilles (12) sont disposés en rangée.

3. Support d'aiguilles selon la revendication 2, dans lequel les segments (10) peuvent être serrés les uns contre les autres de telle sorte que leurs faces frontales adjacentes sont fermement pressées les unes contre les autres.

4. Système d'aiguilles selon la revendication 2 ou 3, dans lequel la chambre de distribution (22) comporte une portion (26) traversée par les aiguilles (16) et un canal d'alimentation (24) à section transversale élargie, s'étendant sur tous les segments (10).

5. Système d'aiguilles selon l'une des revendications précédentes, dans lequel les interstices d'about formés entre les segments (10) sont respectivement rendus étanches par un joint (40) entourant la chambre de distribution (22).

6. Système d'aiguilles selon l'une des revendications précédentes, dans lequel les aiguilles (16) sont disposées dans une matrice uniforme au-delà des frontières des segments (10).

7. Système d'aiguilles selon l'une des revendications précédentes, dans lequel plusieurs aiguilles (16) sont respectivement disposées de façon rigide sur une plaque perforée (28) commune qui est maintenue de manière détachable sur l'un des segments (10) du support d'aiguilles (12).

8. Support d'aiguilles selon la revendication 6, dans lequel les faces frontales adjacentes des segments (10) ont des profils ondulés (46, 48) mutuellement complémentaires qui s'étendent parallèlement aux aiguilles (16).
